# EUROPÄISCHE PATENTANMELDUNG

(11) **EP 3 838 496 A1**
(43) Veröffentlichungstag der Anmeldung: **23.06.2021**
(21) Anmeldenummer: 19218924.9
(22) Anmeldetag: 20.12.2019
(51) Int. Cl.: B25C 1/06, H02K 11/00, H02K 33/00

(54) **ARBEITSGERÄT**

(71) Anmelder: Hilti Aktiengesellschaft, 9494 Schaan (LI)
(72) Erfinder: Abu Antoun, Chafic, 9470 Buchs (CH); Schmid, Florian, 9470 Buchs SG (CH); Binder, Albert, 9470 Buchs (CH); Gut, Manuel, 6811 Göfis (AT)
(74) Vertreter: Hilti Aktiengesellschaft Corporate Intellectual Property

(57) **Zusammenfassung**

Arbeitsgerät zum Bearbeiten eines Untergrunds, insbesondere handgeführtes Arbeitsgerät, insbesondere Setzgerät zum Eintreiben von Befestigungselementen in den Untergrund, aufweisend einen Stator und einen Arbeitskolben, welcher dafür vorgesehen ist, sich relativ zu dem Stator entlang einer Arbeitsachse zu bewegen, weiterhin aufweisend einen Antrieb, welcher dafür vorgesehen ist, den Arbeitskolben entlang der Arbeitsachse von einer Startposition aus auf den Untergrund zu anzutreiben, wobei der Antrieb eine an dem Arbeitskolben angeordnete erste Kolbenspule und eine an dem Stator angeordnete erste Statorspule aufweist, und wobei die erste Kolbenspule dafür vorgesehen ist, während einer Bewegung des Arbeitskolbens relativ zu dem Stator entlang der Arbeitsachse in die erste Statorspule einzutauchen.

## Beschreibung

Die vorliegende Erfindung betrifft ein Arbeitsgerät, wie beispielsweise ein Setzgerät zum Eintreiben von Befestigungselementen in einen Untergrund.

Derartige Arbeitsgeräte weisen oft einen Arbeitskolben auf, welcher dafür vorgesehen ist, sich entlang einer Arbeitsachse zu bewegen. Angetrieben wird der Arbeitskolben von einem Antrieb, welcher den Arbeitskolben beschleunigt. Die WO 2018/104406 A1 beschreibt einen Antrieb, welcher einen elektrischen Kondensator, einen an dem Arbeitskolben angeordneten Kurzschlussläufer und eine Erregerspule aufweist, welche bei einer Schnellentladung des Kondensators mit Strom durchflossen wird und ein Magnetfeld erzeugt, um den Arbeitskolben zu beschleunigen.

Setzgeräte weisen üblicherweise eine Aufnahme für ein Befestigungselement auf, aus welcher heraus ein darin aufgenommenes Befestigungselement entlang einer Arbeitsachse in den Untergrund befördert wird. Das Arbeitselement wird hierfür von dem Antrieb entlang der Arbeitsachse auf das Befestigungselement zu angetrieben. Aus der US 6,830,173 B2 ist ein Setzgerät mit einem Antrieb bekannt, welcher einen elektrischen Kondensator und eine Spule aufweist.

Die Aufgabe der vorliegenden Erfindung liegt darin, ein Setzgerät der vorgenannten Art bereitzustellen, bei dem ein hoher Wirkungsgrad und/oder eine gute Setzqualität gewährleistet ist.

Die Aufgabe ist gelöst bei einem vorzugsweise handgeführten Arbeitsgerät zum Bearbeiten eines Untergrunds, aufweisend einen Stator und einen Arbeitskolben, welcher dafür vorgesehen ist, sich relativ zu dem Stator entlang einer Arbeitsachse zu bewegen, weiterhin aufweisend einen Antrieb, welcher dafür vorgesehen ist, den Arbeitskolben von einer Startposition aus entlang der Arbeitsachse auf den Untergrund zu anzutreiben, wobei der Antrieb eine an dem Arbeitskolben angeordnete erste Kolbenspule und eine an dem Stator angeordnete erste Statorspule aufweist, und wobei die erste Kolbenspule dafür vorgesehen ist, während einer Bewegung des Arbeitskolbens relativ zu dem Stator entlang der Arbeitsachse in die erste Statorspule einzutauchen.

Eine vorteilhafte Ausgestaltung ist dadurch gekennzeichnet, dass die erste Kolbenspule eine erste Kolbenspulenachse und die erste Statorspule eine erste Statorspulenachse aufweist, welche parallel zur ersten Kolbenspulenachse orientiert ist. Bevorzugt fällt die erste Statorspulenachse mit der ersten Kolbenspulenachse zusammen. Ebenfalls bevorzugt sind die erste Kolbenspule und die erste Statorspule gleichsinnig mit Strom beaufschlagbar, um einander gleichgerichtete Magnetfelder zu erzeugen und die erste Kolbenspule in die erste Statorspule hinein zu beschleunigen. Besonders bevorzugt weist der Antrieb eine an dem Arbeitskolben angeordnete zweite Kolbenspule auf, welche relativ zu der ersten Kolbenspule entlang der Arbeitsachse versetzt angeordnet ist und eine zweite Kolbenspulenachse aufweist, welche parallel zur ersten Kolbenspulenachse orientiert ist, wobei die zweite Kolbenspule und die erste Statorspule gegensinnig mit Strom beaufschlagbar sind, um einander entgegengerichtete Magnetfelder zu erzeugen und die zweite Kolbenspule aus der ersten Statorspule heraus zu beschleunigen, während die erste Kolbenspule in die erste Statorspule hinein beschleunigt wird. Die erste Kolbenspule und die zweite Kolbenspule werden dabei relativ zu der ersten Statorspule in die gleiche Richtung beschleunigt. Besonders bevorzugt sind die erste Kolbenspule und die zweite Kolbenspule elektrisch seriell miteinander verschaltet und/oder relativ zueinander gegensinnig gewickelt.

Eine vorteilhafte Ausgestaltung ist dadurch gekennzeichnet, dass die erste Kolbenspule und die erste Statorspule gegensinnig mit Strom beaufschlagbar sind, um einander entgegengesetzte Magnetfelder zu erzeugen und die erste Kolbenspule aus der ersten Statorspule heraus zu beschleunigen. Bevorzugt weist der Antrieb eine an dem Stator angeordnete zweite Statorspule auf, welche relativ zu der ersten Statorspule entlang der Arbeitsachse versetzt angeordnet ist und eine zweite Statorspulenachse aufweist, welche parallel zur ersten Kolbenspulenachse orientiert ist, wobei die erste Kolbenspule und die zweite Statorspule gleichsinnig mit Strom beaufschlagbar sind, um einander gleichgerichtete Magnetfelder zu erzeugen und die erste Kolbenspule in die zweite Statorspule hinein zu beschleunigen, während die erste Kolbenspule aus der ersten Statorspule heraus beschleunigt wird. Die erste Kolbenspule wird dabei relativ zu der ersten Statorspule und relativ zu der zweiten Statorspule in die gleiche Richtung beschleunigt. Besonders bevorzugt sind die erste Statorspule und die zweite Statorspule elektrisch seriell miteinander verschaltet und/oder relativ zueinander gegensinnig gewickelt.

Ebenfalls bevorzugt weist der Antrieb eine an dem Arbeitskolben angeordnete zweite Kolbenspule auf, welche relativ zu der ersten Kolbenspule entlang der Arbeitsachse versetzt angeordnet ist und eine zweite Kolbenspulenachse aufweist, welche parallel zur ersten Kolbenspulenachse orientiert ist, wobei die zweite Kolbenspule und die zweite Statorspule gegensinnig mit Strom beaufschlagbar sind, um einander entgegengerichtete Magnetfelder zu erzeugen und die zweite Kolbenspule aus der zweiten Statorspule heraus zu beschleunigen, während die erste Kolbenspule aus der ersten Statorspule heraus beschleunigt wird. Die erste Kolbenspule und die zweite Kolbenspule werden dabei relativ zu der ersten Statorspule beziehungsweise zu der zweiten Statorspule in die gleiche Richtung beschleunigt.

Eine vorteilhafte Ausgestaltung ist dadurch gekennzeichnet, dass die erste Kolbenspule und die erste Statorspule elektrisch seriell miteinander verschaltet und/oder relativ zueinander gleichsinnig oder gegensinnig gewickelt sind.

Eine vorteilhafte Ausgestaltung ist dadurch gekennzeichnet, dass die erste Kolbenspule einen Kolbenspulenaussendurchmesser aufweist, und wobei die erste Statorspule einen Statorspuleninnendurchmesser aufweist, welcher grösser ist als der Kolbenspulenaussendurchmesser.

Eine vorteilhafte Ausgestaltung ist dadurch gekennzeichnet, dass der Arbeitskolben ein Reluktanzelement aus einem weichmagnetischen Material, welches von dem Magnetfeld, das von der ersten Statorspule erzeugt wird, in die erste Statorspule hineinbeschleunigt wird. Bevorzugt springt das Reluktanzelement quer, insbesondere senkrecht, zur Arbeitsachse von dem übrigen Arbeitskolben auf die erste Statorspule zu vor.

Eine vorteilhafte Ausgestaltung ist dadurch gekennzeichnet, dass der Antrieb einen elektrischen Kondensator aufweist, wobei die erste Statorspule und/oder die erste Kolbenspule elektrisch mit dem elektrischen Kondensator verbindbar ist, um bei einer Schnellentladung des elektrischen Kondensators mit Strom durchflossen zu werden und das Magnetfeld zu erzeugen.

Eine vorteilhafte Ausgestaltung ist dadurch gekennzeichnet, dass das Arbeitsgerät als Setzgerät zum Eintreiben von Befestigungselementen in einen Untergrund ausgebildet ist, aufweisend eine Aufnahme, welche dafür vorgesehen ist, ein Befestigungselement aufzunehmen, wobei der Arbeitskolben oder der Stator dafür vorgesehen ist, ein in der Aufnahme aufgenommenes Befestigungselement entlang der Arbeitsachse in den Untergrund zu befördern, und wobei der Antrieb dafür vorgesehen ist, den Arbeitskolben entlang der Arbeitsachse auf das Befestigungselement zu anzutreiben.

Unter einem Kondensator im Sinne der Erfindung ist ein elektrisches Bauelement zu verstehen, welches elektrische Ladung und die damit verbundene Energie in einem elektrischen Feld speichert. Insbesondere weist ein Kondensator zwei elektrisch leitende Elektroden auf, zwischen denen sich das elektrische Feld aufbaut, wenn die Elektroden elektrisch unterschiedlich geladen werden. Unter einem Befestigungselement im Sinne der Erfindung ist beispielsweise ein Nagel, ein Stift, eine Klammer, ein Clip, ein Bolzen, insbesondere Gewindebolzen oder dergleichen zu verstehen.

Unter einem weichmagnetischen Material im Sinne der Erfindung ist ein Material zu verstehen, welches eine hohe magnetische Sättigungsflussdichte und insbesondere eine kleine Koerzitivfeldstärke aufweist und somit ein das Material durchsetzendes Magnetfeld verstärkt. Insbesondere weist das weichmagnetische Material des Statorrahmens und/oder des Kolbenrahmens eine Sättigungsflussdichte von mindestens 1,0 T, bevorzugt mindestens 1,3 T, besonders bevorzugt mindestens 1,5 T, auf. Unter einem elektrisch leitenden Material im Sinne der Erfindung ist ein Material zu verstehen, welches eine hohe spezifische elektrische Leitfähigkeit aufweist, so dass ein das Material durchsetzendes Magnetfeld in dem Material Wirbelströme erzeugt. Ein weichmagnetisches und/oder elektrisch leitendes Material besteht bevorzugt aus einem ferromagnetischen Material, besonders bevorzugt aus einem ferromagnetischen Metall, beispielsweise Eisen, Kobalt, Nickel, oder einer Legierung mit einem oder mehreren ferromagnetischen Metallen als Hauptbestandteil.

In den Zeichnungen ist die Erfindung in mehreren Ausführungsbeispielen dargestellt.

Es zeigen:
- Fig. 1: ein Arbeitsgerät in einem Längsschnitt,
- Fig. 2: eine Stator-Arbeitskolben-Einheit eines Arbeitsgeräts in einem perspektivischen Längsschnitt,
- Fig. 3: einen Antrieb eines Arbeitsgeräts,
- Fig. 4: eine Stator-Arbeitskolben-Einheit eines Arbeitsgeräts in einem Längsschnitt, und
- Fig. 5: eine Stator-Arbeitskolben-Einheit eines Arbeitsgeräts in einem Längsschnitt.

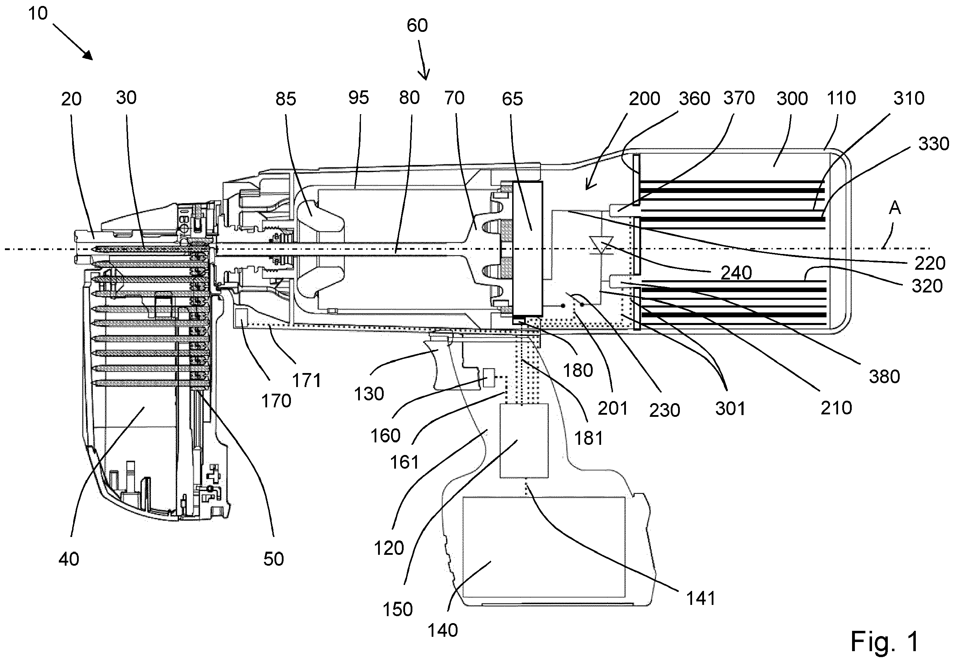

In Fig. 1 ist ein Arbeitsgerät 10 zum Bearbeiten eines nicht gezeigten Untergrunds in einem Längsschnitt dargestellt, welches als handgeführtes Setzgerät zum Eintreiben von Befestigungselementen in den Untergrund ausgebildet ist. Das Arbeitsgerät 10 weist eine als Bolzenführung ausgebildete Aufnahme 20 auf, in welcher ein als Nagel ausgebildetes Befestigungselement 30 aufgenommen ist, um entlang einer Arbeitsachse A in den Untergrund eingetrieben zu werden (in Fig. 1 nach links). Für eine Zuführung von Befestigungselementen zu der Aufnahme umfasst das Arbeitsgerät 10 ein Magazin 40, in welchem die Befestigungselemente einzeln oder in Form eines Befestigungselementestreifens 50 magaziniert aufgenommen sind und nach und nach in die Aufnahme 20 transportiert werden. Das Magazin 40 weist dafür ein nicht näher bezeichnetes federbeaufschlagtes Vorschubelement auf.

Das Arbeitsgerät 10 weist einen Arbeitskolben 60 auf, welcher einen Kolbenkörper 70 und eine Kolbenstange 80 umfasst. Der Arbeitskolben 60 ist dafür vorgesehen, das Befestigungselement 30 aus der Aufnahme 20 heraus entlang der Arbeitsachse A in den Untergrund zu befördern. Hierbei ist der Arbeitskolben 60 mit seinem Kolbenkörper 70 in einem Führungszylinder 95 entlang der Arbeitsachse A geführt. Bei nicht gezeigten Ausführungsbeispielen ist der Arbeitskolben von zwei, drei oder mehr Führungselementen, beispielsweise Führungsstangen entlang der Arbeitsachse geführt. Der Arbeitskolben 60 wird seinerseits von einem Antrieb 65 angetrieben, welcher einen Schaltkreislauf 200 und einen Kondensator 300 umfasst. Der Schaltkreislauf 200 ist dafür vorgesehen, eine elektrische Schnellentladung des zuvor aufgeladenen Kondensators 300 herbeizuführen und den dabei fliessenden Entladestrom dem Antrieb 65 zuzuführen.

Das Arbeitsgerät 10 umfasst weiterhin ein Gehäuse 110, in welchem der Antrieb 65 aufgenommen ist, einen Griff 120 mit einem als Abzug ausgebildeten Betätigungselement 130, einen als Akkumulator ausgebildeten elektrischen Energiespeicher 140, eine Steuereinheit 150, einen Auslöseschalter 160, einen Anpressschalter 170, einen an dem Antrieb 65 angeordneten Temperatursensor 180 und elektrische Verbindungsleitungen 141, 161, 171, 181, 201, 301, welche die Steuereinheit 150 mit dem elektrischen Energiespeicher 140, dem Auslöseschalter 160, dem Anpressschalter 170, dem Temperatursensor 180, dem Schaltkreislauf 200 beziehungsweise dem Kondensator 300 verbinden. Bei nicht gezeigten Ausführungsbeispielen wird das Arbeitsgerät 10 anstelle des elektrischen Energiespeichers 140 oder zusätzlich zu dem elektrischen Energiespeicher 140 mittels eines Netzkabels mit elektrischer Energie versorgt. Die Steuereinheit umfasst elektronische Bauteile, vorzugsweise auf einer Platine miteinander zu einem oder mehreren Steuerstromkreisen verschaltet, insbesondere einen oder mehrere Mikroprozessoren.

Wenn das Arbeitsgerät 10 an einen nicht gezeigten Untergrund (in Fig. 1 nach links) angepresst wird, betätigt ein nicht näher bezeichnetes Anpresselement den Anpressschalter 170, welcher dadurch mittels der Verbindungsleitung 171 ein Anpresssignal an die Steuereinheit 150 überträgt. Davon ausgelöst leitet die Steuereinheit 150 einen Kondensator-Aufladevorgang ein, bei welchem elektrische Energie mittels der Verbindungsleitung 141 von dem elektrischen Energiespeicher 140 zu der Steuereinheit 150 und mittels der Verbindungsleitungen 301 von der Steuereinheit 150 zu dem Kondensator 300 geleitet wird, um den Kondensator 300 elektrisch aufzuladen. Die Steuereinheit 150 umfasst hierzu einen nicht näher bezeichneten Schaltwandler, welcher den elektrischen Strom aus dem elektrischen Energiespeicher 140 in einen geeigneten Ladestrom für den Kondensator 300 umwandelt. Wenn der Kondensator 300 aufgeladen und der Arbeitskolben 60 in seiner in Fig. 1 dargestellten setzbereiten Position ist, befindet sich das Arbeitsgerät 10 in einem setzbereiten Zustand. Dadurch, dass die Aufladung des Kondensators 300 erst durch das Anpressen des Arbeitsgeräts 10 an den Untergrund bewirkt wird, ist zur Erhöhung der Sicherheit von umstehenden Personen ein Setzvorgang nur dann ermöglicht, wenn das Arbeitsgerät 10 an den Untergrund angepresst ist. Bei nicht gezeigten Ausführungsbeispielen leitet die Steuereinheit den Kondensator-Aufladevorgang bereits bei einem Einschalten des Arbeitsgeräts oder bei einem Abheben des Arbeitsgeräts von dem Untergrund oder bei Beendigung eines vorausgegangenen Eintreibvorgangs ein.

Wenn bei setzbereitem Arbeitsgerät 10 das Betätigungselement 130 betätigt wird, beispielsweise durch Ziehen mit dem Zeigefinger der Hand, welche den Griff 120 umgreift, betätigt das Betätigungselement 130 den Auslöseschalter 160, welcher dadurch mittels der Verbindungsleitung 161 ein Auslösesignal an die Steuereinheit 150 überträgt. Davon ausgelöst leitet die Steuereinheit 150 einen Kondensator-Entladevorgang ein, bei dem in dem Kondensator 300 gespeicherte elektrische Energie mittels des Schaltkreislaufs 200 von dem Kondensator 300 zu dem Antrieb 65 geleitet wird, indem der Kondensator 300 elektrisch entladen wird.

Der in Fig. 1 schematisch dargestellte Schaltkreislauf 200 umfasst hierzu zwei Entladeleitungen 210, 220, welche den Kondensator 300 mit dem Antrieb 65 verbinden und von denen zumindest eine Entladeleitung 210 von einem normalerweise geöffneten Entladeschalter 230 unterbrochen ist. Der Schaltkreislauf 200 bildet mit dem Antrieb 65 und dem Kondensator 300 unter Umständen einen elektrischen Schwingkreis. Ein Hin- und Herschwingen dieses Schwingkreises und/oder ein negatives Aufladen des Kondensators 300 wirkt sich unter Umständen negativ auf einen Wirkungsgrad des Antriebs 65 aus, lässt sich aber mit Hilfe einer Freilaufdiode 240 unterbinden. Die Entladeleitungen 210, 220 sind mittels an einer der Aufnahme 20 zugewandten Stirnseite 360 des Kondensators 300 angeordneter elektrischer Kontakte 370, 380 des Kondensators 300 elektrisch mit jeweils einer auf einer Trägerfolie 330 angeordneten Elektrode 310, 320 des Kondensators 300 verbunden, beispielsweise durch Verlöten, Verschweissen, Verschrauben, Verklemmen oder Formschluss. Der Entladeschalter 230 eignet sich vorzugsweise zum Schalten eines Entladestroms mit hoher Stromstärke und ist beispielsweise als Thyristor ausgebildet. Ausserdem haben die Entladeleitungen 210, 220 einen geringen Abstand zueinander, damit ein von ihnen induziertes parasitäres Magnetfeld möglichst gering ist. Beispielsweise sind die Entladeleitungen 210, 220 zu einer Sammelschiene ("Bus Bar") zusammengefasst und mit einem geeigneten Mittel, beispielsweise einem Halter oder einer Klammer, zusammengehalten. Bei nicht gezeigten Ausführungsbeispielen ist die Freilaufdiode elektrisch parallel zu dem Entladeschalter geschaltet. Bei weiteren nicht gezeigten Ausführungsbeispielen ist keine Freilaufdiode in dem Schaltkreis vorgesehen.

Zur Einleitung des Kondensator-Entladevorgangs schliesst die Steuereinheit 150 mittels der Verbindungsleitung 201 den Entladeschalter 230, wodurch ein Entladestrom des Kondensators 300 mit hoher Stromstärke durch den Antrieb 65 fliesst, welcher den Arbeitskolben 60 auf die Aufnahme 20 sowie das darin aufgenommene Befestigungselement 30 zu antreibt. Sobald die Kolbenstange 80 des Arbeitskolbens 60 auf einen nicht näher bezeichneten Kopf des Befestigungselements 30 trifft, wird das Befestigungselement 30 von dem Arbeitskolben 60 in den Untergrund eingetrieben. Überschüssige Bewegungsenergie des Arbeitskolbens 60 wird von einem Bremselement 85 aus einem federelastischen und/oder dämpfenden Material, beispielsweise Gummi oder einem Elastomer, aufgenommen, indem sich der Arbeitskolben 60 mit seinem Kolbenkörper 70 gegen das Bremselement 85 bewegt und von diesem bis zu einem Stillstand abgebremst wird. Danach wird der Arbeitskolben 60 von einer nicht näher bezeichneten Rückstellvorrichtung in die setzbereite Position zurückgestellt.

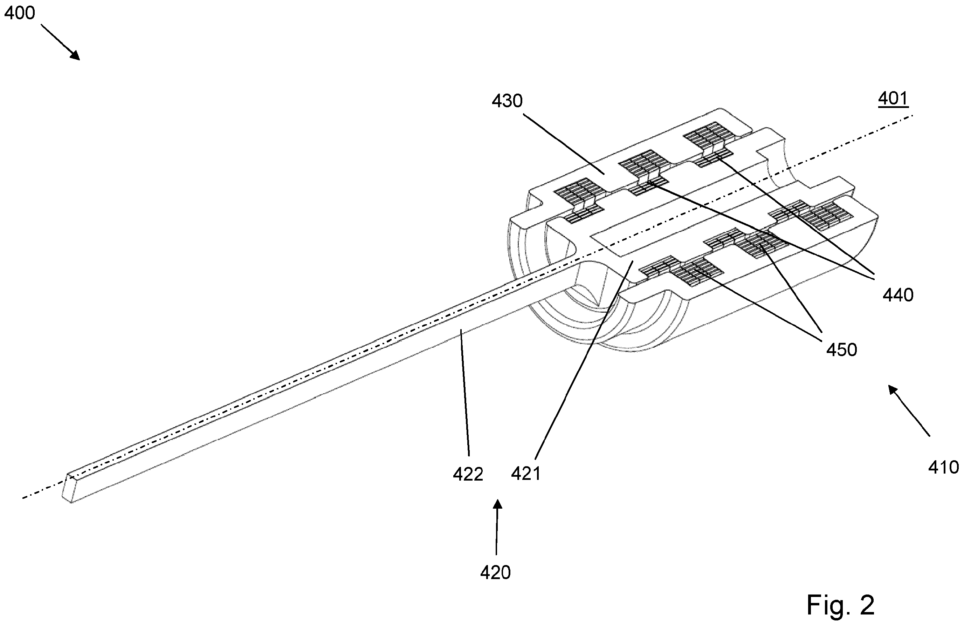

In Fig. 2 ist eine eine Stator-Arbeitskolben-Einheit 400 eines Arbeitsgeräts, beispielsweise des in Fig. 1 gezeigten Arbeitsgeräts 10 dargestellt. Die Antrieb-Arbeitskolben-Einheit 400 ist entlang einer Arbeitsachse 401 längs aufgeschnitten dargestellt und umfasst einen teilweise gezeigten Antrieb 410, einen Arbeitskolben 420 und einen Stator 430. Der Arbeitskolben 420 weist einen Kolbenkörper 421 und eine Kolbenstange 422 auf und ist dafür vorgesehen, sich relativ zu dem Stator 430 entlang der Arbeitsachse 401 zu bewegen. Der Antrieb 410 ist dafür vorgesehen, den Arbeitskolben 420 entlang der Arbeitsachse 401 anzutreiben. Hierzu umfasst der Antrieb 410 einen nicht gezeigten Kolbenspulenkondensator sowie einen nicht gezeigten Statorspulenkondensator und mehrere an dem Arbeitskolben 420 angeordnete Kolbenspulen 440 sowie mehrere an dem Stator angeordnete Statorspulen 450 auf.

Die Kolbenspulen 440 sind elektrisch mit dem Kolbenspulenkondensator verbindbar, um bei einer Schnellentladung des Kolbenspulenkondensators mit Strom durchflossen zu werden und erste Magnetfelder zu erzeugen. Die Statorspulen 450 sind elektrisch mit dem Statorspulenkondensator verbindbar, um bei einer Schnellentladung des Statorspulenkondensators mit Strom durchflossen zu werden und zweite Magnetfelder zu erzeugen, welche mit den ersten Magnetfeldern wechselwirken und abwechselnd abstossende und anziehende Kräfte zwischen jeweils einer der Kolbenspulen 440 und einer der Statorspulen 450 bewirken und den Arbeitskolben 420 entlang der Arbeitsachse 401 aus dem Stator 430 heraus beschleunigen. Abstossende Kräfte zwischen jeweils einer Kolbenspule 440 und einer Statorspule 450 werden beispielsweise dadurch bewirkt, dass das von der Statorspule 450 erzeugte Magnetfeld dem von der Kolbenspule 440 erzeugten Magnetfeld entgegengesetzt ist. Die Kolbenspule 440 und die Statorspule 450 werden hierzu bevorzugt gegensinnig und zeitlich überlappend, insbesondere gleichzeitig mit elektrischem Strom beaufschlagt, indem der Kolbenspulenkondensator und der Statorspulenkondensator entsprechend zeitlich aufeinander abgestimmt entladen werden, beispielsweise von einer nicht gezeigten Steuereinheit gesteuert. Die Kolbenspulen 440 und die Statorspulen 450 weisen jeweils eine Kolbenspulenachse beziehungsweise eine Statorspulenachse auf, welche mit der Arbeitsachse 401 zusammenfallen und somit parallel zueinander orientiert sind.

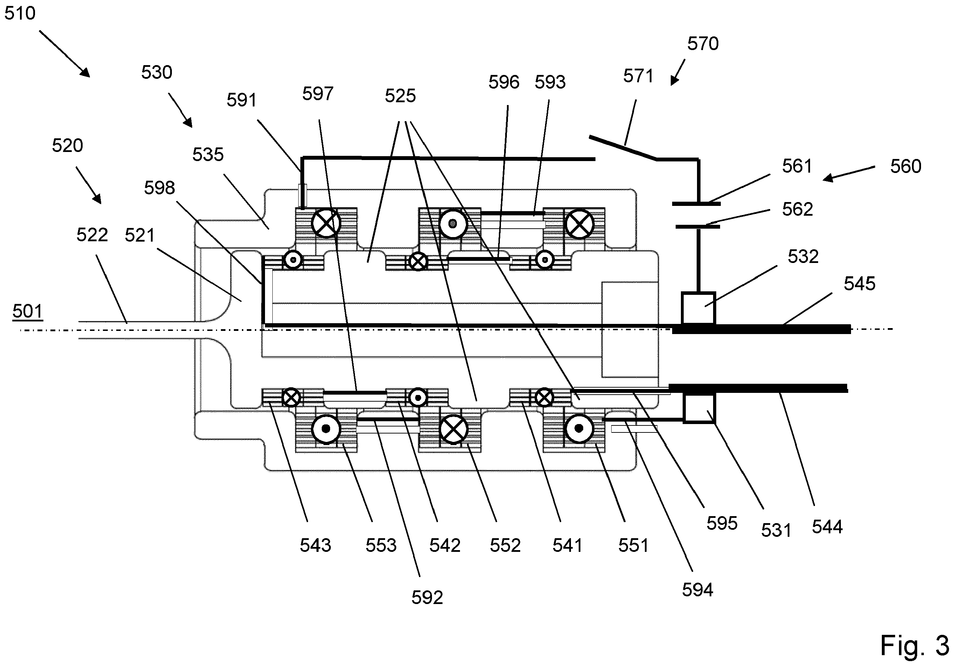

In Fig. 3 ist ein Antrieb 510 eines Arbeitsgeräts, beispielsweise des in Fig. 1 gezeigten Arbeitsgeräts 10 dargestellt. Der Antrieb 510 ist entlang einer Arbeitsachse 501 längs aufgeschnitten dargestellt und dafür vorgesehen, einen Arbeitskolben 520 mit einem Kolbenkörper 521 und einer Kolbenstange 522 entlang der Arbeitsachse 501 anzutreiben und relativ zu einem Stator 530 zu bewegen. Der Antrieb 510 umfasst einen Kondensator 560 mit einer ersten Elektrode 561 sowie einer zweiten Elektrode 562, einen Schaltkreislauf 570 mit einem Schalter 571, eine an dem Arbeitskolben 520 angeordnete erste Kolbenspule 541, eine an dem Arbeitskolben 520 angeordnete zweite Kolbenspule 542, eine an dem Arbeitskolben 520 angeordnete dritte Kolbenspule 543, eine an dem Stator 530 angeordnete erste Statorspule 551, eine an dem Stator 530 angeordnete zweite Statorspule 552 und eine an dem Stator 530 angeordnete dritte Statorspule 553. Die Kolbenspulen 541, 542, 543 sind elektrisch mit dem Kondensator 560 verbindbar, um bei einer Schnellentladung des Kondensators 560 mit Strom durchflossen zu werden, so dass der Kondensator 560 einen Kolbenspulenkondensator darstellt. Ein Stromfluss durch die Kolbenspulen 541, 542, 543 erzeugt dabei erste Magnetfelder. Die Statorspulen 551, 552, 553 sind ebenfalls elektrisch mit dem Kondensator 560 verbindbar, um bei einer Schnellentladung des Kondensators 560 mit Strom durchflossen zu werden, so dass der Kondensator 560 auch einen Statorspulenkondensator darstellt. Ein Stromfluss durch die Statorspulen 551, 552, 553 erzeugt zweite Magnetfelder.

Die erste Elektrode 561 des Kondensators 560 ist mit einem Eingang des Schalters 571 elektrisch verbunden und gegenüber der zweiten Elektrode 562 aufladbar, welche bevorzugt mit einem nicht gezeigten ersten Massepotential, beispielsweise dem Minuspol eines elektrischen Akkumulators oder einer Batterie, elektrisch verbunden ist. Ein Ausgang des Schalters 571 ist mit einem Eingang der dritten Statorspule 553 auf einer Aussenseite der dritten Statorspule 553 mittels einer ersten Verbindungsleitung 591 elektrisch verbunden, bevorzugt fest verdrahtet. Ein Ausgang der dritten Statorspule 553 auf einer Innenseite der dritten Statorspule 553 ist mit einem Eingang der zweiten Statorspule 553 auf einer Innenseite der zweiten Statorspule 552 mittels einer zweiten Verbindungsleitung 592 elektrisch verbunden, bevorzugt fest verdrahtet. Ein Ausgang der zweiten Statorspule 552 auf einer Aussenseite der zweiten Statorspule 552 ist mit einem Eingang der ersten Statorspule 551 auf einer Aussenseite der ersten Statorspule 551 mittels einer dritten Verbindungsleitung 593 elektrisch verbunden, bevorzugt fest verdrahtet. Ein Ausgang der ersten Statorspule 551 auf einer Innenseite der ersten Statorspule 551 ist mit einem als Kontaktbürste ausgebildeten ersten elektrischen Statorkontakt 531, welchen der Stator 530 aufweist, mittels einer vierten Verbindungsleitung 594 elektrisch verbunden, bevorzugt fest verdrahtet.

Ein Eingang der ersten Kolbenspule 541 auf einer Innenseite der Kolbenspule 540 ist mit einem als Kontaktschiene ausgebildeten ersten Kolbenkontakt 544, welchen der Arbeitskolben 520 aufweist, mittels einer fünften Verbindungsleitung 595 elektrisch verbunden, bevorzugt fest verdrahtet. Der erste Kolbenkontakt 544 gleitet elektrisch leitend an dem ersten Statorkontakt 531 entlang, wenn sich der Arbeitskolben 520 entlang der Arbeitsachse 501 bewegt. Eine nicht gezeigte erste Feder belastet den ersten Statorkontakt 531 auf den ersten Kolbenkontakt 544 zu. Bei nicht gezeigten Ausführungsbeispielen belastet eine Feder zusätzlich oder alternativ den ersten Kolbenkontakt auf den ersten Statorkontakt zu. Ein Ausgang der ersten Kolbenspule 541 auf einer Aussenseite der ersten Kolbenspule 541 ist mit einem Eingang der zweiten Kolbenspule 542 auf einer Aussenseite der zweiten Kolbenspule 542 mittels einer sechsten Verbindungsleitung 596 elektrisch verbunden, bevorzugt fest verdrahtet. Ein Ausgang der zweiten Kolbenspule 542 auf einer Innenseite der zweiten Kolbenspule 542 ist mit einem Eingang der dritten Kolbenspule 543 auf einer Innenseite der dritten Kolbenspule 543 mittels einer siebten Verbindungsleitung 597 elektrisch verbunden, bevorzugt fest verdrahtet. Ein Ausgang der dritten Kolbenspule 543 auf einer Aussenseite der dritten Kolbenspule 543 ist mit einem als Kontaktschiene ausgebildeten zweiten Kolbenkontakt 545, welchen der Arbeitskolben 520 aufweist, mittels einer achten Verbindungsleitung 598 elektrisch verbunden, bevorzugt fest verdrahtet.

Der zweite Kolbenkontakt 545 gleitet elektrisch leitend an einem zweiten Statorkontakt 532 entlang, wenn sich der Arbeitskolben 520 entlang der Arbeitsachse 501 bewegt. Der Stator 530 weist den zweiten Statorkontakt 532 auf, welcher als Kontaktbürste ausgebildet und mit der zweiten Elektrode 562 des Kondensators 560, bei nicht gezeigten Ausführungsbeispielen mit dem ersten oder einem zweiten Massepotential, elektrisch verbunden ist. Eine nicht gezeigte zweite Feder belastet den zweiten Statorkontakt 532 auf den zweiten Kolbenkontakt 545 zu. Bei nicht gezeigten Ausführungsbeispielen belastet eine Feder zusätzlich oder alternativ den zweiten Kolbenkontakt auf den zweiten Statorkontakt zu. Die Kolbenkontakte 544, 545 kontaktieren die Statorkontakte 531, 532 nicht notwendigerweise während der gesamten Bewegung des Arbeitskolbens. Bei einigen Anwendungen ist eine Kontaktierung während der ersten 0,5 ms bis 1 ms, insbesondere während der ersten 0,6 ms ausreichend. Die Kolbenkontakte 544, 545 weisen eine Länge in Richtung der Arbeitsachse 501 auf, welche für einige Anwendungsgebiete etwa 10 mm bis 30 mm beträgt.

Die Kolbenkontakte 544, 545 sind starr mit dem übrigen Arbeitskolben 520 verbunden und bewegen sich mit dem übrigen Arbeitskolben 520 mit. Bei nicht gezeigten Ausführungsbeispielen ist der erste und/oder der zweite Statorkontakt als Schleifring ausgebildet. Bei weiteren nicht gezeigten Ausführungsbeispielen ist der erste und/oder der zweite Statorkontakt als Kontaktschiene und der erste beziehungsweise der zweite Kolbenkontakt als Kontaktbürste oder Schleifring ausgebildet. Der zweite Kolbenkontakt 545 und der zweite Statorkontakt 532 sind bezüglich der Arbeitsachse 501 radial innerhalb der Statorspule 550 und der Kolbenspule 540 angeordnet. Bei nicht gezeigten Ausführungsbeispielen sind zusätzlich oder alternativ der erste Kolbenkontakt und der erste Statorkontakt radial innerhalb der Statorspule und/oder der Kolbenspule angeordnet.

Die Schnellentladung des Kondensators 560 über die Kolbenspulen 541, 542, 543 und die Statorspulen 551, 552, 553 ist mittels des Schaltkreislaufs 570 auslösbar, indem der Schalter 571 bei elektrisch aufgeladenem Kondensator 560 geschlossen und die Kolbenspulen 541, 542, 543 sowie die Statorspulen 551, 552, 553 elektrisch mit dem Kondensator 560 verbunden werden. Der elektrische Strom fliesst dann von dem Kondensator 560 durch den Schalter 571, von aussen nach innen durch die dritte Statorspule 553, von innen nach aussen durch die zweite Statorspule 552, von aussen nach innen durch die erste Statorspule 551, durch den ersten Statorkontakt 531 und den ersten Kolbenkontakt 544, von innen nach aussen durch die erste Kolbenspule 541, von aussen nach innen durch die zweite Kolbenspule 542, von innen nach aussen durch die dritte Kolbenspule 543 und schliesslich durch den zweiten Kolbenkontakt 545 und den zweiten Statorkontakt 532 zum Kondensator 560.

Die Kolbenspulen 541, 542, 543 und die Statorspulen 551, 552, 553 weisen jeweils eine Kolbenspulenachse beziehungsweise eine Statorspulenachse auf, welche mit der Arbeitsachse 501 zusammenfallen und somit parallel zueinander orientiert sind. Die Kolbenspulen 541, 542, 543 und die Statorspulen 551, 552, 553 sind gleichsinnig gewickelt. Bei nicht gezeigten Ausführungsbeispielen sind die Spulen gegensinnig gewickelt. Die Kolbenspulen 541, 542, 543 und die Statorspulen 551, 552, 553 sind elektrisch seriell zueinander verschaltet, werden also gleichzeitig von elektrischem Strom durchflossen, wobei eine Stromstärke des durch die Spulen 541, 542, 543, 551, 552, 553 fliessenden Stroms für die Kolbenspulen 541, 542, 543 und die Statorspulen 551, 552, 553 gleich ist. Vorzugsweise weisen die Kolbenspulen 541, 542, 543 und die Statorspulen 551, 552, 553 darüber hinaus jeweils gleich viele Spulenwindungen auf, so dass die von den Spulen 541, 542, 543, 551, 552, 553 erzeugten Magnetfelder im Wesentlichen gleich stark sind.

Bevorzugt besteht der Kolbenkörper 521 vorzugsweise aus einem weichmagnetischen Material besteht, wie beispielsweise Eisen oder eine Legierung davon, beispielsweise Stahl. Ebenfalls bevorzugt besteht die Kolbenstange 522 aus dem weichmagnetischen Material und ist besonders bevorzugt einstückig mit dem Kolbenkörper 521 verbunden, wodurch unter Umständen eine Steifigkeit und/oder mechanische Robustheit des Arbeitskolbens 520 erhöht ist. Der Stator 530 weist einen Statorrahmen 535 auf, welcher vorzugsweise aus einem weichmagnetischen Material besteht, wie beispielsweise Eisen oder eine Legierung davon, beispielsweise Stahl. Der Statorrahmen 535 umgibt die Statorspulen 551, 552, 553 und erstreckt sich bezüglich der Arbeitsachse 501 in einer umlaufenden Richtung. Dadurch werden die von den Statorspulen 551, 552, 553 erzeugten Magnetfelder im Bereich der Kolbenspulen 541, 542, 543 verstärkt und die beschleunigende Kraft zwischen dem Stator 530 und dem Arbeitskolben 520 erhöht.

Der Antrieb 510 ist dafür vorgesehen, den Arbeitskolben 520 von einer in Fig. 3 gezeigten Startposition aus entlang der Arbeitsachse 501 nach vorne auf den Untergrund zu (in Fig. 3 nach links) anzutreiben. In der Startposition taucht die erste Kolbenspule 541 teilweise in die erste Statorspule 551 ein und ist relativ zu der ersten Statorspule nach vorne versetzt angeordnet. Ebenso taucht die zweite Kolbenspule 542 beziehungsweise die dritte Kolbenspule 543 teilweise in die zweite Statorspule 552 beziehungsweise in die dritte Statorspule 553 ein und ist relativ zu der zweiten Statorspule 552 beziehungsweise zu der dritten Statorspule 553 nach vorne versetzt angeordnet.

In Fig. 3 sind die Spulen 541, 542, 543, 551, 552, 553 mit Kreissymbolen versehen, wobei ein Punkt im Kreis einen Stromfluss aus der Zeichenebene heraus und ein Kreuz im Kreis einen Stromfluss in die Zeichenebene hinein darstellt. Die erste Kolbenspule 541 und die erste Statorspule 551 sind gegensinnig mit Strom beaufschlagt und erzeugen daher einander entgegengesetzte Magnetfelder, so dass die erste Kolbenspule 541 nach vorne aus der ersten Statorspule 551 heraus beschleunigt wird. Die erste Kolbenspule 541 und die zweite Statorspule 552 sind gleichsinnig mit Strom beaufschlagt und erzeugen daher einander gleichgerichtete Magnetfelder, so dass die erste Kolbenspule 541 nach vorne in die zweite Statorspule 552 hinein beschleunigt wird, während die erste Kolbenspule 541 aus der ersten Statorspule 551 heraus beschleunigt wird, nämlich gleichzeitig. Die zweite Kolbenspule 542 und die zweite Statorspule 552 sind wiederum gegensinnig mit Strom beaufschlagt und erzeugen daher einander entgegengesetzte Magnetfelder, so dass die zweite Kolbenspule 542 nach vorne aus der zweiten Statorspule 552 heraus beschleunigt wird. Die zweite Kolbenspule 542 und die dritte Statorspule 553 sind gleichsinnig mit Strom beaufschlagt und erzeugen daher einander gleichgerichtete Magnetfelder, so dass die zweite Kolbenspule 542 nach vorne in die dritte Statorspule 553 hinein beschleunigt wird, während sie aus der zweiten Statorspule 552 heraus beschleunigt wird, nämlich gleichzeitig. Die dritte Kolbenspule 542 und die dritte Statorspule 552 sind wiederum gegensinnig mit Strom beaufschlagt und erzeugen daher einander entgegengesetzte Magnetfelder, so dass die dritte Kolbenspule 542 nach vorne aus der zweiten Statorspule 552 heraus beschleunigt wird.

Insgesamt werden alle Kolbenspulen 541, 542, 543 gleichzeitig nach vorne beschleunigt. Die erste Kolbenspule 541 wird aus der ersten Statorspule 551 heraus und in die zweite Statorspule 552 hinein beschleunigt. In die zweite Statorspule 552 wird die erste Kolbenspule 541 hinein und aus der zweiten Statorspule 552 wird die zweite Kolbenspule 542 heraus beschleunigt. Bei nicht gezeigten Ausführungsbeispielen ist die erste Kolbenspule in der Startposition relativ zu der ersten Statorspule nach hinten versetzt angeordnet und die erste Kolbenspule und die erste Statorspule werden gleichsinnig mit elektrischem Strom beaufschlagt, so dass die erste Kolbenspule in die erste Statorspule hinein beschleunigt wird. Die erste Kolbenspule 541 weist einen Kolbenspulenaussendurchmesser auf, welcher grösser ist als ein Statorspuleninnendurchmesser der ersten Statorspule 551. Während sich der Arbeitskolben 520 nach vorne bewegt, taucht die erste Kolbenspule 541 in die zweite Statorspule 552 ein und vollständig durch die zweite Statorspule 552 hindurch, ebenso durch die dritte Statorspule 553.

Der Arbeitskolben 520 weist drei Reluktanzelemente 525 aus einem weichmagnetischen Material auf, welche als umlaufende Vorsprünge des Arbeitskolbens 520 ausgebildet sind. In der in Fig. 3 gezeigten Startposition des Arbeitskolbens 520 werden die Reluktanzelement 525 jeweils von einem Magnetfeld, das von einer der Statorspulen 551, 552, 553 erzeugt wird, in die jeweilige Statorspule 551, 552, 553 hineinbeschleunigt. Dies erhöht eine gesamte Beschleunigung des Arbeitskolbens 520 nach vorne.

Durch das Eintauchen der Kolbenspulen 541, 542, 543 findet eine Kraftübertragung über eine relativ lange Zeit und/oder einen relativ langen Weg des Arbeitskolbens 520 statt, so dass eine relativ kleine Maximalkraft für eine ausreichende Energieübertragung erforderlich ist. Dadurch sind mechanische Belastungen auf sämtliche Bauteile des Antriebs 510 reduziert. Ausserdem ist ein relativ kleiner Maximalstrom erforderlich. Darüber hinaus wird entstehende Abwärme auf mehrere Spulen verteilt, was eine Kühlung des Antriebs 519 erleichtert.

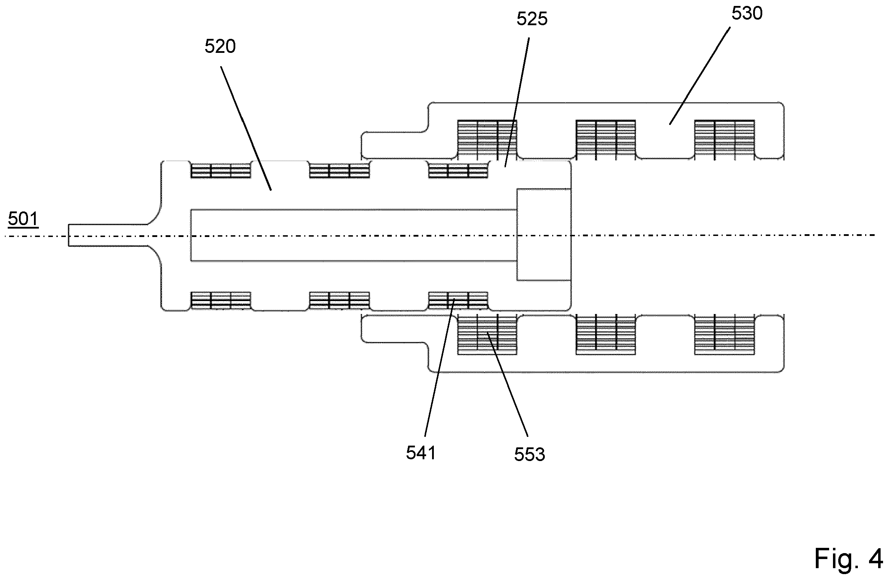

In Fig. 4 sind der Arbeitskolben 520 und der Stator 530 in einer ersten Endposition des Arbeitskolbens 520 entlang der Arbeitsachse 501 dargestellt. Die erste Kolbenspule 541 ist relativ zur dritten Statorspule 553 entlang der Arbeitsachse 501 nach vorne versetzt angeordnet. Durch gleichsinnige Beaufschlagung der ersten Kolbenspule 541 und der dritten Statorspule 553 ist es möglich, den Arbeitskolben 520 nach hinten zu beschleunigen, um ihn in die Startposition zu befördern. Die in Fig. 3 gezeigte serielle Verschaltung der Spulen ist hierfür nicht geeignet. Vielmehr ist eine Umpolung oder separate Bestromung der ersten Kolbenspule 541 oder der dritten Statorspule 553 erforderlich.

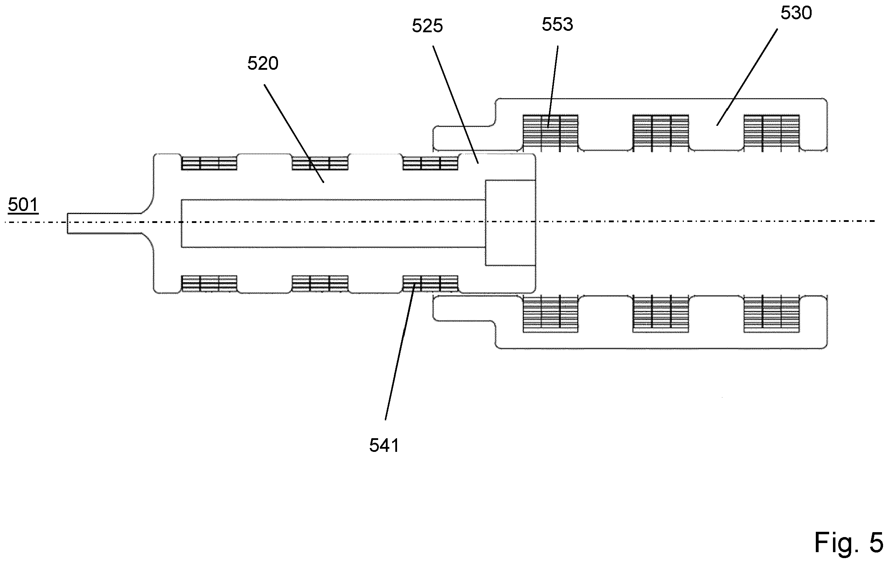

In Fig. 5 sind der Arbeitskolben 520 und der Stator 530 in einer weiteren Endposition des Arbeitskolbens 520 entlang der Arbeitsachse 501 dargestellt. Ein erstes Reluktanzelement 525 ist relativ zur dritten Statorspule 553 entlang der Arbeitsachse 501 nach vorne versetzt angeordnet. Durch Beaufschlagung der dritten Statorspule 553 mit elektrischem Strom ist es möglich, den Arbeitskolben 520 nach hinten zu beschleunigen, um ihn in die Startposition oder zumindest in die in Fig. 4 gezeigte erste Endposition zu befördern.

Die Erfindung wurde anhand einer Reihe von in den Zeichnungen dargestellten und nicht dargestellten Ausführungsbeispielen beschrieben. Die einzelnen Merkmale der verschiedenen Ausführungsbeispiele sind einzeln oder in beliebiger Kombination miteinander anwendbar, soweit sie sich nicht widersprechen. Es wird darauf hingewiesen, dass das erfindungsgemässe Arbeitsgerät auch für andere Anwendungen einsetzbar ist, beispielsweise als Bohrhammer oder dergleichen.

## Patentansprüche

1. Arbeitsgerät zum Bearbeiten eines Untergrunds, insbesondere handgeführtes Arbeitsgerät, insbesondere Setzgerät zum Eintreiben von Befestigungselementen in den Untergrund, aufweisend einen Stator und einen Arbeitskolben, welcher dafür vorgesehen ist, sich relativ zu dem Stator entlang einer Arbeitsachse zu bewegen, weiterhin aufweisend einen Antrieb, welcher dafür vorgesehen ist, den Arbeitskolben entlang der Arbeitsachse von einer Startposition aus auf den Untergrund zu anzutreiben, wobei der Antrieb eine an dem Arbeitskolben angeordnete erste Kolbenspule und eine an dem Stator angeordnete erste Statorspule aufweist, und wobei die erste Kolbenspule dafür vorgesehen ist, während einer Bewegung des Arbeitskolbens relativ zu dem Stator entlang der Arbeitsachse in die erste Statorspule einzutauchen.

2. Arbeitsgerät nach Anspruch 1, wobei die erste Kolbenspule eine erste Kolbenspulenachse aufweist und die erste Statorspule eine erste Statorspulenachse aufweist, welche parallel zur ersten Kolbenspulenachse orientiert ist und insbesondere mit der ersten Kolbenspulenachse zusammenfällt.

3. Arbeitsgerät nach Anspruch 2, wobei die erste Kolbenspule und die erste Statorspule gleichsinnig mit Strom beaufschlagbar sind, um einander gleichgerichtete Magnetfelder zu erzeugen und die erste Kolbenspule in die erste Statorspule hinein zu beschleunigen.

4. Arbeitsgerät nach Anspruch 3, wobei der Antrieb eine an dem Arbeitskolben angeordnete zweite Kolbenspule aufweist, welche relativ zu der ersten Kolbenspule entlang der Arbeitsachse versetzt angeordnet ist und eine zweite Kolbenspulenachse aufweist, welche parallel zur ersten Kolbenspulenachse orientiert ist, wobei die zweite Kolbenspule und die erste Statorspule gegensinnig mit Strom beaufschlagbar sind, um einander entgegengerichtete Magnetfelder zu erzeugen und die zweite Kolbenspule aus der ersten Statorspule heraus zu beschleunigen, während die erste Kolbenspule in die erste Statorspule hinein beschleunigt wird, wobei die erste Kolbenspule und die zweite Kolbenspule relativ zu der ersten Statorspule in die gleiche Richtung beschleunigt werden.

5. Arbeitsgerät nach Anspruch 4, wobei die erste Kolbenspule und die zweite Kolbenspule elektrisch seriell miteinander verschaltet und/oder relativ zueinander gegensinnig gewickelt sind.

6. Arbeitsgerät nach einem der Ansprüche 2 bis 5, wobei die erste Kolbenspule und die erste Statorspule gegensinnig mit Strom beaufschlagbar sind, um einander entgegengesetzte Magnetfelder zu erzeugen und die erste Kolbenspule aus der ersten Statorspule heraus zu beschleunigen.

7. Arbeitsgerät nach Anspruch 6, wobei der Antrieb eine an dem Stator angeordnete zweite Statorspule aufweist, welche relativ zu der ersten Statorspule entlang der Arbeitsachse versetzt angeordnet ist und eine zweite Statorspulenachse aufweist, welche parallel zur ersten Kolbenspulenachse orientiert ist, wobei die erste Kolbenspule und die zweite Statorspule gleichsinnig mit Strom beaufschlagbar sind, um einander gleichgerichtete Magnetfelder zu erzeugen und die erste Kolbenspule in die zweite Statorspule hinein zu beschleunigen, während die erste Kolbenspule aus der ersten Statorspule heraus beschleunigt wird, wobei die erste Kolbenspule relativ zu der ersten Statorspule und relativ zu der zweiten Statorspule in die gleiche Richtung beschleunigt wird.

8. Arbeitsgerät nach Anspruch 7, wobei die erste Statorspule und die zweite Statorspule elektrisch seriell miteinander verschaltet und/oder relativ zueinander gegensinnig gewickelt sind.

9. Arbeitsgerät nach einem der Ansprüche 7 bis 8, wobei der Antrieb eine an dem Arbeitskolben angeordnete zweite Kolbenspule aufweist, welche relativ zu der ersten Kolbenspule entlang der Arbeitsachse versetzt angeordnet ist und eine zweite Kolbenspulenachse aufweist, welche parallel zur ersten Kolbenspulenachse orientiert ist, wobei die zweite Kolbenspule und die zweite Statorspule gegensinnig mit Strom beaufschlagbar sind, um einander entgegengerichtete Magnetfelder zu erzeugen und die zweite Kolbenspule aus der zweiten Statorspule heraus zu beschleunigen, während die erste Kolbenspule aus der ersten Statorspule heraus beschleunigt wird, wobei die erste Kolbenspule und die zweite Kolbenspule relativ zu der ersten Statorspule beziehungsweise zu der zweiten Statorspule in die gleiche Richtung beschleunigt werden.

10. Arbeitsgerät nach einem der vorhergehenden Ansprüche, wobei die erste Kolbenspule und die erste Statorspule elektrisch seriell miteinander verschaltet und/oder relativ zueinander gleichsinnig oder gegensinnig gewickelt sind.

11. Arbeitsgerät nach einem der vorhergehenden Ansprüche, wobei die erste Kolbenspule einen Kolbenspulenaussendurchmesser aufweist, und wobei die erste Statorspule einen Statorspuleninnendurchmesser aufweist, welcher grösser ist als der Kolbenspulenaussendurchmesser.

12. Arbeitsgerät nach einem der vorhergehenden Ansprüche, wobei der Arbeitskolben ein Reluktanzelement aus einem weichmagnetischen Material, welches von dem Magnetfeld, das von der ersten Statorspule erzeugt wird, in die erste Statorspule hineinbeschleunigt wird.

13. Arbeitsgerät nach Anspruch 12, wobei das Reluktanzelement quer zur Arbeitsachse von dem übrigen Arbeitskolben auf die erste Statorspule zu vorspringt.

14. Arbeitsgerät nach einem der vorhergehenden Ansprüche, wobei der Antrieb einen elektrischen Kondensator aufweist, wobei die erste Statorspule und/oder die erste Kolbenspule elektrisch mit dem elektrischen Kondensator verbindbar ist, um bei einer Schnellentladung des elektrischen Kondensators mit Strom durchflossen zu werden und das Magnetfeld zu erzeugen.

15. Arbeitsgerät nach einem der vorhergehenden Ansprüche, aufweisend eine Aufnahme, welche dafür vorgesehen ist, ein Befestigungselement aufzunehmen, wobei der Arbeitskolben oder der Stator dafür vorgesehen ist, ein in der Aufnahme aufgenommenes Befestigungselement entlang der Arbeitsachse in den Untergrund zu befördern.
